(19) **Europäisches Patentamt / European Patent Office / Office européen des brevets**

(11) **EP 4 726 681 A1**

(12) **EUROPEAN PATENT APPLICATION**
published in accordance with Art. 153(4) EPC

(43) Date of publication:
**15.04.2026 Bulletin 2026/16**

(21) Application number: **25800697.2**

(22) Date of filing: **06.08.2025**

(51) International Patent Classification (IPC):
**G06V 40/20** (2022.01)

(86) International application number:
**PCT/CN2025/112969**

(87) International publication number:
**WO 2026/037170 (19.02.2026 Gazette 2026/08)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **16.08.2024 HK 32024095675**

(71) Applicant: **Chung, Kai Ip Wan**
**Pak Shek Kok, N.T. (HK)**

(72) Inventor: **Chung, Kai Ip Wan**
**Pak Shek Kok, N.T. (HK)**

(74) Representative: **Cabinet Chaillot**
**16/20, avenue de l'Agent Sarre**
**B.P. 74**
**92703 Colombes Cedex (FR)**

(54) **METHOD AND SYSTEM FOR POSE DETECTION AND REAL-TIME FEEDBACK**

(57) A method and a system for pose detection and real-time feedback are provided. The method includes: performing an exercise movement by a user, capturing a current video frame image by an application in real time, and sending the current video frame image to a back end; estimating user pose coordinates by using a pose estimation model according to the video frame image; calculating a similarity score of a current movement pose by using a pose similarity algorithm according to standard pose coordinates and the user pose coordinates; performing feedback according to the similarity score, and displaying correct and incorrect parts of the current movement pose; and continuing to capture a next frame of image by the application until the user finishes the exercise movement, and recording and displaying a pose count.

| Performing an exercise movement by a user, capturing a current video frame image by an application in real time, and sending the current video frame image to a back end | S1 |

↓

| Estimating user pose coordinates by using a pose estimation model according to the video frame image | S2 |

↓

| Calculating a similarity score of each limb of a current movement pose and an overall similarity score by using a pose similarity algorithm according to standard pose coordinates and the user pose coordinates | S3 |

↓

| Performing feedback according to the similarity score, and displaying correct and incorrect parts of the current movement pose | S4 |

↓

| Continuing to capture a next frame of image by the application until the user finishes the exercise movement, and recording and displaying a pose count | S5 |

**FIG. 1**

EP 4 726 681 A1

**Description**

**TECHNICAL FIELD**

The present disclosure relates to the technical field of artificial intelligent image recognition, and in particular to a method and a system for pose detection and real-time feedback.

**BACKGROUND**

With the improvement of health awareness and the progress of science and technology, the pose detection technology has gradually become an important means to promote personal health, optimize sports performance and prevent sport injuries. Conventional pose detection technologies are mostly based on two-dimensional image analysis, which includes capturing an image of a user by a camera, and comparing the captured image with a preset standard pose to evaluate the accuracy of the pose of the user. However, this two-dimensional analysis method faces many limitations in practical application, and it is difficult to meet growing demands for health management and sports training.

At present, there are following technical problems in conventional pose detection technology.

(1) Because it only depends on two-dimensional image information, it is difficult for the prior art to comprehensively and accurately capture three-dimensional pose information of the user, especially pose evaluation at different angles. This leads to limited accuracy of pose detection, it is easy to cause misjudgment due to visual error, leading to the increase of the risk of injury.

(2) In sports training where repeated counting is required, the conventional method often relies on manual counting or simple image processing techniques, which is not only inefficient, but also prone to errors, and impacts training efficiency and data reliability.

(3) Most of the existing pose detection technologies can only provide static or post-analysis results, and lack the ability to dynamically adjust movements of the user in real time from multiple angles during the exercise process. This lagging feedback cannot correct an incorrect pose of the user in time, leading to the limitation on effectiveness of the existing pose detection technologies in improving exercising efficiency and preventing injuries in applications.

**SUMMARY**

An objective of the present disclosure is to provide a method and system for pose detection and real-time feedback to solve the problem of the existing pose detection technology provided in the foregoing background is difficult to comprehensively capture three-dimensional pose information and correct an incorrect pose of a user.

To achieve the objective above, the present disclosure employs the following technical solution:

According to one aspect of the present disclosure, a method for pose detection and real-time feedback is provided, including the following steps:

performing an exercise movement by a user, capturing a current video frame image by an application in real time, and sending the current video frame image to a back end;

estimating user pose coordinates by using a pose estimation model according to the video frame image;

calculating a similarity score of each limb of a current movement pose and an overall similarity score by using a pose similarity algorithm according to standard pose coordinates and the user pose coordinates;

performing feedback according to the similarity score, and displaying correct and incorrect parts of the current movement pose; and

continuing to capture a next frame of image by the application until the user finishes the exercise movement, and recording and displaying a pose count.

Based on the foregoing solution, the user pose coordinates are three-dimensional key point coordinates, the pose estimation model is configured to receive the current video frame image as an input, a neural network is used to extract a two-dimensional feature map of the video frame image, and a model is trained to predict the three-dimensional key point coordinates according to the two-dimensional feature map, and fitting is performed on a three-dimensional pose dataset.

Based on the foregoing solution, a standard pose of each exercise movement is collected from a database or other data sources, and the standard pose is converted into three-dimensional standard pose coordinates.

Based on the foregoing solution, the standard pose can be further collected from a real-time streaming media for the user to acquire immediate feedback.

Based on the foregoing solution, the user pose coordinates are aligned with the standard pose coordinates, making the user pose coordinates and the standard pose coordinates located in a same reference coordinate system.

Based on the foregoing solution, the pose similarity algorithm is used to evaluate a degree of similarity between the user pose coordinates and the standard pose coordinates by using limb-by-limb similarity scores, which includes: respectively calculating position vectors of limb key points of a user pose and the standard pose, and calculating a dot product of each position vector to obtain a similarity score of each limb, and weighting and averaging the similarity scores of the limbs to obtain an overall similarity score.

Based on the foregoing solution, the performing feedback according to the similarity score includes comparing the similarity score with a specified threshold to determine whether a current pose is correct or close to be correct; displaying the user pose on a user interface in real time, and marking the correct and incorrect parts of the pose with different colors or markers.

Based on the foregoing solution, if the similarity score reaches the specified threshold, the current pose is considered to be correct or close to be correct, and positive feedback is provided to the user; and if the similarity score does not reach the specified threshold, the current pose is considered to require correction, and corrective feedback is provided to the user.

Based on the foregoing solution, before the user finishes the exercise movement, the application continues to capture and process a video frame, and whether the exercise movement is finished or not is determined by a user input or automatic detection, and a result of the pose count is displayed on the user interface.

According to another aspect of the present disclosure, a system for pose detection and real-time feedback is provided, including a video capture module, a pose estimation module, a similarity evaluation module, a feedback display module, a counting and recording module, and an interaction control module.

The video capture module is configured to capture a video frame image of an exercise movement performed by a user in real time.

The pose estimation module is configured to receive the video frame image, and estimate user pose coordinates by using a pose estimation module.

The similarity evaluation module is configured to calculate a similarity score of each limb of a current movement pose and an overall similarity score by using a pose similarity algorithm according to the user pose coordinates and standard pose coordinates.

The feedback display module is configured to display correct and incorrect parts of the current movement pose to the user according to the similarity score.

The counting and recording module is configured to record the number of times the user completes the exercise movement every time, and display a total count when the user finishes the movement.

The interaction control module is configured to process an interaction instruction of the user, where the interaction instruction includes, but is not limited to, starting, pausing, and finishing the movement.

As can be known from the foregoing technical solutions, compared with the prior art, the present disclosure at least has the following advantages and beneficial effects.

(1) A pose of a user can be estimated and evaluated more accurately by using a pose estimation model and a pose similarity algorithm, the accuracy is significantly improved especially in different angles and complex motion scenes, which can reduce misjudgment caused by visual errors.

(2) Automatic and intelligent pose counting function makes the user get rid of the tedious and inefficient manual counting, and can reduce possibility of human error and improve the accuracy and reliability of data, thereby improving the efficiency of exercise and training.

(3) Real-time and dynamic feedback of correct and incorrect parts of the pose can help the user adjust movements in time and ensure a correct body form, thereby avoiding the limitations of lagging feedback in the conventional method, and improving the exercising effectiveness and safety.

In the present disclosure, it should be understood that both the foregoing general descriptions and the following detailed descriptions are exemplary and explanatory only, rather than being restrictive of the present disclosure.

## BRIEF DESCRIPTION OF THE DRAWINGS

The accompanying drawings herein are incorporated into and constitute a part of the specification, which show embodiments in line with the present disclosure, and serve to explain the principle of the present disclosure together with the specification. Apparently, the accompanying drawings in the following description are some embodiments of the present disclosure, and those of ordinary skill in the art may still derive other accompanying drawings from these accompanying drawings without creative efforts. In the accompanying drawings:

FIG. 1 is a diagram of a method for pose detection and real-time feedback according to the present disclosure;
FIG. 2 is a flow diagram of outputting user pose coordinates by a pose estimation model according to the present disclosure;
FIG. 3 is a flow diagram of a pose similarity algorithm and feedback providing according to the present disclosure;
FIG. 4 is a diagram of a system for pose detection and real-time feedback according to the present disclosure.

## DETAILED DESCRIPTION OF THE EMBODIMENTS

To make the objectives, technical solutions and advantages of the present disclosure more clear, the following clearly and completely describes the technical solutions in the embodiments of the present disclosure with reference to the accompanying drawings of the embodiments in the present disclosure. Apparently, the described embodiments are merely a part rather than all of the embodiments of the present disclosure. The exemplary embodiments can be implemented in various forms and should not be construed as being limited to the embodiments described herein. On the contrary, these embodiments are provided, so that the present disclosure will be comprehensive and complete, and the concept of the exemplary embodiments will be fully conveyed to those skilled in the art.

Moreover, features, structures or characteristics described here may be combined in one or more embodiments in any suitable manner. In the following description, numerous specific details are set forth to so as to provide a comprehensive understanding of the embodiments of the present disclosure. However, those skilled in the art should realize that the technical solutions of the present disclosure can be practiced without one or more of the specific details, or other methods, components, apparatuses, steps and the like can be adopted. In other cases, well-known methods, apparatuses, implementations or operations are not shown or described in detail to avoid obscuring aspects of the present disclosure.

Block diagrams shown in the accompanying drawing are only functional entities and do not necessarily correspond to physically independent entities. That is, these functional entities may be implemented in the form of software, or in one or more hardware modules or integrated circuits, or in different networks and/or processor apparatuses and/or microcontroller apparatuses.

The flow diagrams shown in the accompanying drawings are only illustrative, and do not necessarily include all contents and operations/steps, nor do they have to be executed in a described order. For example, some operations/steps can be decomposed, while others can be merged or partially combined. Therefore, the actual execution order may be changed according to the actual situation.

The present disclosure is further described below in detail with reference to specific embodiments:

**Embodiment 1**

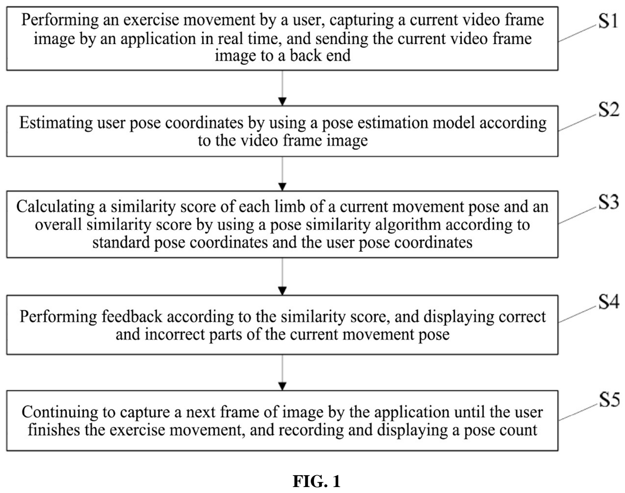

As shown in FIG. 1, this embodiment provides a method for pose detection and real-time feedback, which specifically includes the following steps.

S1: A user performs an exercise movement, and an application captures a current video frame image in real time, and sends the current video frame image to a back end.

In this embodiment, the user performs exercise training by using an application on a mobile device. When the user starts to perform an exercise movement, the application captures a real-time video stream and extracts a video frame image.

Specifically, when the application is started, the user is requested to authorize an access to a camera of the device to ensure that the application has obtained a camera access right of the device. A camera API (application programming interface) of the mobile device is used to capture the video stream in real time and start real-time video preview. For video frame capture, a timer may be set, or a callback mechanism of the video stream can be used, to capture an image of a current frame from the video stream at regular intervals (such as 30 frames per second). During the extraction of the video frame, the video frame can be extracted from the video stream at a fixed frame rate (such as 30 FPS (frames per second)). The captured image is subjected to necessary processing, such as resizing and grayscale conversion, thereby adapting to input requirements of a pose estimation model.

Further, a resolution and a frame rate of the video frame are set according to an actual use requirement to ensure that the resolution and frame rate of the video frame are sufficient to support accurate pose estimation. In consideration of the influence of lighting conditions on image quality, it may be necessary to add automatic exposure adjustment or an image enhancement algorithm to ensure the efficiency of image capture and processing, thereby avoiding affecting the fluency of the video.

S2. User pose coordinates are estimated by using the pose estimation model according to the video frame image.

In this embodiment, the user pose coordinates are three-dimensional key point coordinates of a body, the pose estimation model is configured to receive the current video frame image as an input, a neural network is used to extract a two-dimensional feature map of the video frame image, and a model is trained to predict the three-dimensional key point coordinates according to the two-dimensional feature map, and fitting is performed on a three-dimensional pose dataset.

Specifically, when the application is started or used for the first time, a pre-trained pose estimation model is downloaded from a server or loaded from a local storage. The extracted video frame image is preprocessed and then transmitted to the pose estimation model, and the model outputs two-dimensional coordinates of key points of the body (such as head, shoulders, and knees).

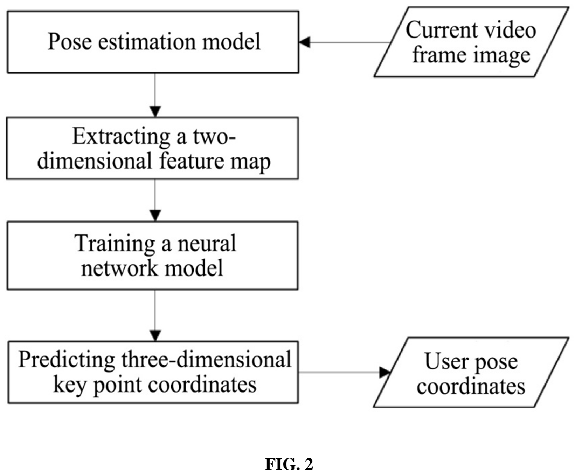

Further, as shown in FIG. 2, the pose estimation model receives a video frame image as an input, CNN (convolutional neural network) is used to extract a two-dimensional feature map of each frame of image, where the feature map includes abundant spatial information for subsequent three-dimensional pose estimation. A neural network model is trained on a data set containing massive pictures, two-dimensional key point annotations (as features) and corresponding three-dimensional key point coordinates to reconstruct and predict three-dimensional coordinates (X, Y, Z) of each key point from the two-dimensional key point coordinates. Optionally, a statistical model is fitted on the three-dimensional pose dataset to achieve mapping from the two-dimensional coordinates to the three-dimensional coordinates, thereby further enhancing prediction capacity to the three-dimensional key point coordinates. Optionally, after the user pose coordinates are obtained, non-maximum suppression (NMS) and other techniques can be used to optimize a key point detection result, and the stability and accuracy of pose estimation can be further improved by using time smoothing and geometric constraints.

Further, the pose estimation model can be subjected to an end-to-end training to directly output a three-dimensional pose from an input image, thereby avoiding multi-stage processing in the conventional method.

S3. A similarity score of each limb of a current movement pose and an overall similarity score are calculated by using a pose similarity algorithm according to standard pose coordinates and the user pose coordinates.

In this embodiment, a standard pose of each exercise movement is collected from a database or other data sources, and the standard pose is converted into three-dimensional standard pose coordinates. The standard pose is further collected from a real-time streaming media for the user to acquire immediate feedback. Alternatively, a set of key point coordinates of the standard pose can be predefined for each exercise movement, and a set of standard three-dimensional pose coordinates can be defined according to requirements of the exercise movement, which may be a set of positions of multiple key points.

Further, the user pose coordinates are aligned with the standard pose coordinates, so that the user pose coordinates and the standard pose coordinates are both located in a same reference coordinate system. Optionally, the user pose coordinates and the standard pose coordinates can be aligned to the same reference system by using affine transformation, similarity transformation and other methods, thereby minimizing the error between the user pose coordinates and the standard pose coordinates.

Optionally, positions of the body parts of the user in a virtual space are adjusted by using a method for maximizing the overlap, making the positions of the body parts aligned with the standard pose to the greatest extent. The user pose is translated and rotated to minimize a spatial difference between the user pose and a coach pose. Image processing or deep learning technology can be used to identify and track key body parts of the user, namely, key points, and then the user can be guided to adjust the pose by calculating an offset between the corresponding points in the user pose coordinates and the standard pose coordinates.

Optionally, the user pose is aligned with the standard pose by using a method for transforming a basis vector. In a three-dimensional space, the basis vector usually refers to a direction vector of a coordinate axis (such as x, y and z axis). By transforming these basis vectors, the whole pose frame can be rotated and translated, thereby making the pose of the user align with the pose of the coach. By calculating appropriate transformation matrices (such as a rotation matrix and a translation matrix), it can be ensured that every detail of the user pose is accurately aligned with the pose of the coach.

Optionally, a method for matching forward vectors is used to ensure that the user keeps alignment with a direction of the standard pose during the exercise. In the three-dimensional space, the forward vector generally refers to a direction that the user or coach faces. By matching these two forward vectors, it can be ensured that the user is not only correct in pose, but also consistent in direction when imitating the movement. An angle between the forward vector of the user and the forward vector of the coach can be calculated, and this angle difference can be eliminated by corresponding rotation.

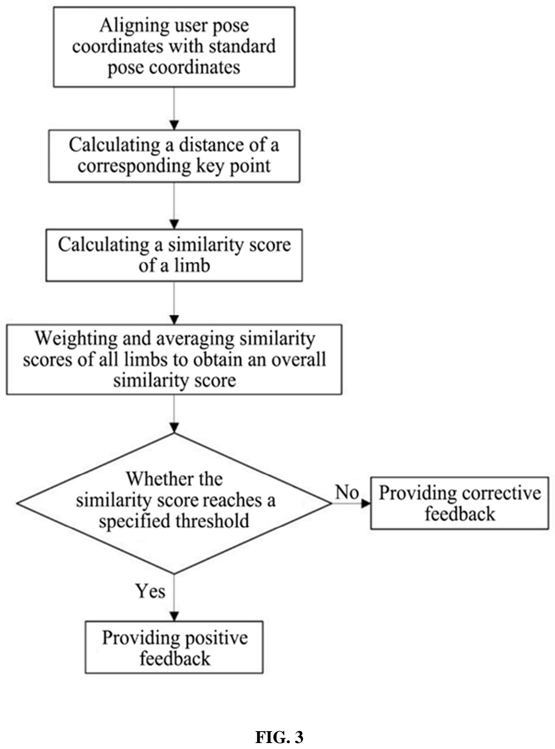

Further, as shown in FIG. 3, the pose similarity algorithm is used to evaluate a degree of similarity between the user pose coordinates and the standard pose coordinates by using limb-by-limb similarity scores, including: respectively calculating position vectors of limb key points of a pose of the user and the standard pose, and calculating a dot product of each position vector to obtain a similarity score of each limb, and weighting and averaging the similarity scores of the limbs to obtain an overall similarity score.

Specifically, limb-by-limb similarity scores are generally used to evaluate a similarity degree between two poses (such as one standard pose and one pose of the user). This algorithm generally involves comparing positions and directions of corresponding limbs in the poses.

In this embodiment, firstly, the key point coordinates of limbs in the pose of the user and the standard pose are defined, and each limb is represented by two key points (similar to a line segment with two endpoints) to form a position vector. A calculation method of the position vector of each limb is as follows:

The three-dimensional coordinates of two key points of a limb i are set as $K_{i,1} = (x_1, y_1, z_1)$ and $K_{i,2} = (x_2, y_2, z_2)$, further, a position vector of the limb is as follows: $P_i = K_{i,2} - K_{i,1} = (x_2 - x_1, y_2 - y_1, z_2 - z_1)$.

Further, dot products $< P_i^U$ and $P_i^S >$ of two vectors of a limb $P_i^U$ of the user and a standard limb $P_i^S$ are used to measure the degree of similarity of the pose of the user and the standard pose, where a value of the dot product ranges from [-1, 1], 1 represents that limb movements are completely similar (overlapping), and -1 represents that limb movements are completely opposite. Further, in consideration of the angle and the overlapping degree, the dot product can be properly transformed or combined with other measurements (such as a vector-to-length ratio, an angle cosine value) to reflect the similarity degree more accurately, and the similarity degree is normalized to obtain a similarity score of each limb. The similarity scores of all limbs are weighted and averaged to obtain an overall similarity score of the pose of the user and the standard pose, thereby evaluating the similarity degree between the pose of the user and the standard pose.

S4. Feedback is performed according to the overall similarity, and correct and incorrect parts of the current movement pose are displayed.

In this embodiment, the overall similarity score is compared with a specified threshold to determine whether a current pose is correct or close to be correct. The pose of the user is displayed on a user interface in real time, where the correct and incorrect parts are marked with different colors or markers.

Further, if the overall similarity score reaches the specified threshold, it is considered that the current pose is correct or close to correct, and positive feedback is provided to the user; and if the similarity score does not reach the specified threshold, it is considered that the current pose needs to be corrected, and corrective feedback is provided to the user. Further, the feedback may also be provided to the user according to the similarity score of the limb. Optionally, when it is determined that the current pose is correct or close to correct, the interface displays the positive feedback, such as "well done!", "keep on!", and the like. When it is determined that the current pose needs to be corrected, incorrect parts in the pose of the user highlighted or marked with different colors, and corrective feedback is displayed, such as "please adjust arm position". Optionally, the positive or corrective feedback is provided through a voice assistant or on-screen text prompts according to the overall similarity score or the similarity score of each limb.

Further, render feedback on frame is provided for all video frames, whether the similarity score is sufficient or not, feedback information can be rendered on each video frame, so that the user can intuitively see whether the pose is correct or not, and make continuous adjustments according to continuous feedback. Optionally, a live image of the user and a standard pose model can be in overlapping display, and differences are highlighted by colors, lines, shadows and the like. A virtual "mirror" is created, in which a comparison of a movement of the user and the standard pose can be displayed, making the user feel like interacting with the own mirror image. Animations or arrows can be added to the feedback to indicate how the user should adjust the own pose or movement.

S5. The application continues to capture a next frame of image until the user finishes the exercise movement, and a pose count is recorded and displayed.

In this embodiment, before the user finishes the exercise movement, operations in steps S1 to S4 are repeated to continuously capture and process the video frame. Whenever it is detected that the user successfully completes a pose that meets the standard (that is, the similarity score reaches the specified threshold), a pose counter is increased. Whether the exercise movement is finished or not is determined by user input (such as, clicking a button) or automatic detection (such as detecting long-term inactivity), and a result of the pose count is displayed on the user interface for reference.

## Embodiment 2

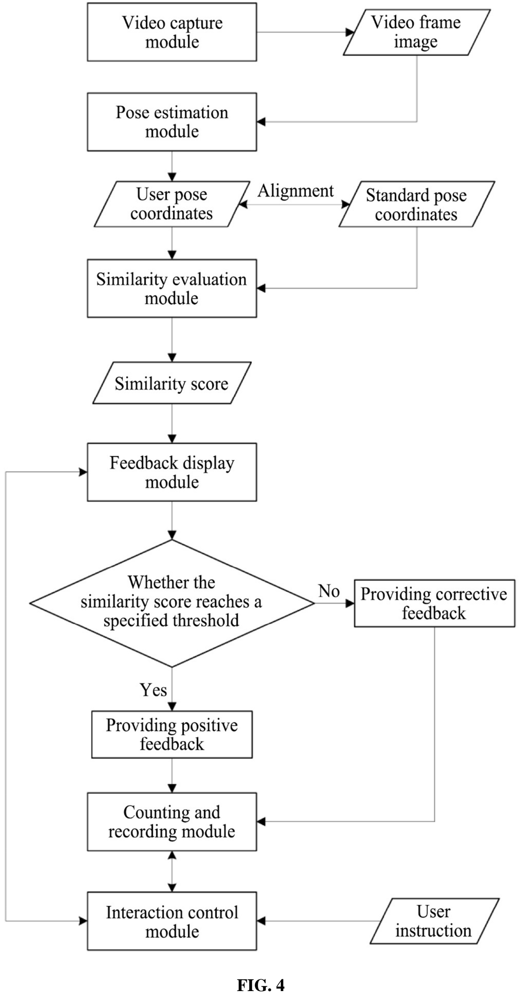

As shown in FIG. 4, this embodiment shows an example of a system for pose detection and real-time feedback, including a video capture module, a pose estimation module, a similarity evaluation module, a feedback display module, a counting and recording module, and an interaction control module.

The video capture module is configured to capture a video frame image of an exercise movement performed by a user in real time. The pose estimation module is configured to receive the video frame image, and estimate user pose coordinates by using a pose estimation module. The similarity evaluation module is configured to align the user pose coordinates and standard pose coordinates, and calculate a similarity score of each limb of a current movement pose and an overall similarity score by using a pose similarity algorithm. The feedback display module is configured to display correct and incorrect parts of the current movement pose to the user according to the similarity score. The counting and recording module is configured to record the number of times the user correctly completes the exercise movement every time, and display a total count when the user finishes the movement. The interaction control module is configured to process an interaction instruction of the user, where the interaction instruction includes, but is not limited to, starting, pausing, and finishing the movement.

Specifically, the video capture module is configured to capture a video frame image of the exercise movement performed by the user in real time, capture a video stream by using a camera API of a device, and extract image data of each frame. An interface is implemented to provide image frame data to a subsequent module for processing.

The pose estimation module is configured to receive the video frame image, estimate user pose coordinates by using the pose estimation model, load a pre-trained pose estimation model to process an input image frame, and output key point coordinates of the user. An interface is implemented to receive the image frame and output data of the user pose coordinates.

The similarity evaluation module is configured to calculate a similarity score of a current movement pose by using a pose similarity algorithm according to the user pose coordinates and the standard pose coordinates after alignment. An interface is implemented to receive the user pose coordinates and the standard pose coordinates and output the similarity score of each limb and the overall similarity score.

The feedback display module is configured to display a correct part and an incorrect part of the pose to the user according to the overall similarity score, and overlay and highlight the correct and incorrect parts on the video frame by using a graphical interface. An interface is implemented to receive the similarity score and the user pose coordinates and output visual feedback to the user interface. Further, if the similarity score reaches the specified threshold, it is considered that the current pose is correct or close to be correct, positive feedback is provided to the user; and if the similarity score does not reach the specified threshold, it is considered that the current pose needs to be corrected, and corrective feedback is provided to the user.

The counting and recording module is configured to process an interaction instruction of the user, such as starting, pausing and finishing exercise, monitor the user input, and call functions of corresponding module. An interface is implemented to receive a user instruction, call the functions of other modules, and display status updates to the user.

After considering the specification and practicing the present disclosure disclosed herein, a person skilled in the art may easily conceive of other implementations of the present disclosure. The present disclosure is intended to cover any variations, uses or adaptive changes of the present disclosure, these variations, uses or adaptive changes follow the general principles of the present disclosure, and include the well-known knowledge and conventional technical means in the art and undisclosed in the present disclosure. It should be understood that the present disclosure is not limited to the precise structures described above and shown in the accompanying drawings, and various modifications and changes may be made without departing from the scope of the present disclosure. The scope of the present disclosure is subject only to the appended claims.

**Claims**

1. A method for pose detection and real-time feedback, comprising:

   performing an exercise movement by a user, capturing a current video frame image by an application in real time, and sending the current video frame image to a back end;
   estimating user pose coordinates by using a pose estimation model according to the video frame image;
   calculating a similarity score of each limb of a current movement pose and an overall similarity score by using a pose similarity algorithm according to standard pose coordinates and the user pose coordinates;
   performing feedback according to the similarity score, and displaying correct and incorrect parts of the current movement pose; and
   continuing to capture a next frame of image by the application until the user finishes the exercise movement, and recording and displaying a pose count.

2. The method for pose detection and real-time feedback according to claim 1, wherein the user pose coordinates are three-dimensional key point coordinates, the pose estimation model is configured to receive the current video frame image as an input, a neural network is used to extract a two-dimensional feature map of the video frame image, and a model is trained to predict the three-dimensional key point coordinates according to the two-dimensional feature map, and fitting is performed on a three-dimensional pose dataset.

3. The method for pose detection and real-time feedback according to claim 1, wherein a standard pose of each exercise movement is collected from a database or other data sources, and the standard pose is converted into three-dimensional standard pose coordinates.

4. The method for pose detection and real-time feedback according to claim 3, wherein the standard pose is further collected from a real-time streaming media for the user to acquire immediate feedback.

5. The method for pose detection and real-time feedback according to claim 1, wherein the user pose coordinates are aligned with the standard pose coordinates, making the user pose coordinates and the standard pose coordinates located in a same reference coordinate system.

6. The method for pose detection and real-time feedback according to claim 1, wherein the pose similarity algorithm is used to evaluate a similarity degree between the user pose coordinates and the standard pose coordinates by using limb-by-limb similarity scores, which comprises: respectively calculating position vectors of limb key points of a pose of the user and the standard pose, and calculating a dot product of each position vector to obtain a similarity score of each limb, and weighting and averaging the similarity scores of the limbs to obtain an overall similarity score.

7. The method for pose detection and real-time feedback according to claim 1, wherein the performing feedback according to the similarity score comprises comparing the similarity score with a specified threshold to determine whether a current pose is correct or close to be correct; displaying the pose of the user on a user interface in real time, and marking the correct and incorrect parts with different colors or markers.

8. The method for pose detection and real-time feedback according to claim 7, wherein if the similarity score reaches the specified threshold, the current pose is considered to be correct or close to be correct, and positive feedback is provided to the user; and if the similarity score does not reach the specified threshold, the current pose is considered to require correction, and corrective feedback is provided to the user.

9. The method for pose detection and real-time feedback according to claim 1, wherein before the user finishes the exercise movement, the application continues to capture and process a video frame, and whether the exercise movement is finished or not is determined by a user input or automatic detection, and a result of the pose count is displayed on the user interface.

10. A system for pose detection and real-time feedback, comprising a video capture module, a pose estimation module, a similarity evaluation module, a feedback display module, a counting and recording module, and an interaction control module, wherein

the video capture module is configured to capture a video frame image of an exercise movement performed by a user in real time;
the pose estimation module is configured to receive the video frame image, and estimate user pose coordinates by using a pose estimation module;
the similarity evaluation module is configured to calculate a similarity score of each limb of a current movement pose and an overall similarity score by using a pose similarity algorithm according to the user pose coordinates and standard pose coordinates;
the feedback display module is configured to display correct and incorrect parts of the current movement pose to the user according to the similarity score;
the counting and recording module is configured to record the number of times the user completes the exercise movement every time, and display a total count when the user finishes the movement; and
the interaction control module is configured to process an interaction instruction of the user, wherein the interaction instruction comprises, but is not limited to, starting, pausing, and finishing the movement.

| Performing an exercise movement by a user, capturing a current video frame image by an application in real time, and sending the current video frame image to a back end | S1 |

| Estimating user pose coordinates by using a pose estimation model according to the video frame image | S2 |

| Calculating a similarity score of each limb of a current movement pose and an overall similarity score by using a pose similarity algorithm according to standard pose coordinates and the user pose coordinates | S3 |

| Performing feedback according to the similarity score, and displaying correct and incorrect parts of the current movement pose | S4 |

| Continuing to capture a next frame of image by the application until the user finishes the exercise movement, and recording and displaying a pose count | S5 |

**FIG. 1**

Pose estimation model ← Current video frame image

↓

Extracting a two-dimensional feature map

↓

Training a neural network model

↓

Predicting three-dimensional key point coordinates → User pose coordinates

**FIG. 2**

Aligning user pose coordinates with standard pose coordinates

Calculating a distance of a corresponding key point

Calculating a similarity score of a limb

Weighting and averaging similarity scores of all limbs to obtain an overall similarity score

Whether the similarity score reaches a specified threshold

No → Providing corrective feedback

Yes

Providing positive feedback

**FIG. 3**

```
┌──────────────────┐                          ┌──────────────────┐
│  Video capture   │ ───────────────────────▶ │   Video frame    │
│     module       │                          │     image        │
└──────────────────┘                          └──────────────────┘
        │                                               │
        ▼                                               │
┌──────────────────┐                                    │
│ Pose estimation  │ ◀──────────────────────────────────┘
│     module       │
└──────────────────┘
        │
        ▼
┌──────────────────┐    Alignment    ┌──────────────────┐
│   User pose      │ ◀────────────── │  Standard pose   │
│  coordinates     │                 │  coordinates     │
└──────────────────┘                 └──────────────────┘
        │                                     │
        ▼                                     │
┌──────────────────┐                          │
│Similarity        │ ◀────────────────────────┘
│evaluation module │
└──────────────────┘
        │
        ▼
┌──────────────────┐
│ Similarity score │
└──────────────────┘
        │
        ▼
┌──────────────────┐
│ Feedback display │
│     module       │
└──────────────────┘
        │
        ▼
     ╱╲
    ╱  ╲
   ╱    ╲   Whether the
  ╱      ╲  similarity score reaches a     No    ┌──────────────────┐
 ╲        ╱ specified threshold     ─────────────▶│Providing         │
  ╲      ╱                                        │corrective        │
   ╲    ╱                                         │feedback          │
    ╲  ╱                                          └──────────────────┘
     ╲╱                                                   │
      │ Yes                                               │
      ▼                                                   │
┌──────────────────┐                                      │
│ Providing        │                                      │
│ positive         │                                      │
│ feedback         │                                      │
└──────────────────┘                                      │
      │                                                   │
      ▼                                                   │
┌──────────────────┐                                      │
│ Counting and     │ ◀────────────────────────────────────┘
│ recording module │
└──────────────────┘
      │
      ▼
┌──────────────────┐                       ┌──────────────────┐
│ Interaction      │ ◀──────────────────── │  User            │
│ control module   │                       │  instruction     │
└──────────────────┘                       └──────────────────┘
```

**FIG. 4**

12

**TRANSLATION**

### INTERNATIONAL SEARCH REPORT

International application No.

**PCT/CN2025/112969**

#### A. CLASSIFICATION OF SUBJECT MATTER

G06V 40/20(2022.01)i

According to International Patent Classification (IPC) or to both national classification and IPC

#### B. FIELDS SEARCHED

Minimum documentation searched (classification system followed by classification symbols)

IPC:G06V

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE, 必应, BING: 标准, 错误, 动作, 锻炼, 健身, 反馈, 个数, 计数, 三维, 视频, 数目, 次数, 提示, 相似度, 运动, 正确, 姿态, 坐标, "3D", standard, error, motion, exercise, fitness, feedback, number, count, three-dimensional, video, cue, similarity, correct, pose, coordinates

#### C. DOCUMENTS CONSIDERED TO BE RELEVANT

| Category* | Citation of document, with indication, where appropriate, of the relevant passages | Relevant to claim No. |
|---|---|---|
| PX | HK 30114530 A2 (ZHONG JIYE) 07 March 2025 (2025-03-07)<br>claims 1-10 | 1-10 |
| X | CN 115620392 A (ZHUHAI SHIXI TECHNOLOGY CO., LTD.) 17 January 2023 (2023-01-17)<br>description, paragraphs [0055]-[0155] | 1-10 |
| A | CN 106984027 A (CPT TECHNOLOGY (GROUP) CO., LTD.) 28 July 2017 (2017-07-28)<br>entire document | 1-10 |
| A | CN 113611387 A (TSINGHUA SHENZHEN INTERNATIONAL GRADUATE SCHOOL) 05 November 2021 (2021-11-05)<br>entire document | 1-10 |
| A | US 2023116624 A1 (CHENGDU FIT-FUTURE TECHNOLOGY CO., LTD.) 13 April 2023 (2023-04-13)<br>entire document | 1-10 |

☐ Further documents are listed in the continuation of Box C.　　☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **05 November 2025** | **11 November 2025** |

| Name and mailing address of the ISA/CN | Authorized officer |
|---|---|
| China National Intellectual Property Administration (ISA/CN)<br>China No. 6, Xitucheng Road, Jimenqiao, Haidian District, Beijing 100088 | |
| | Telephone No. |

Form PCT/ISA/210 (second sheet) (July 2022)

INTERNATIONAL SEARCH REPORT
Information on patent family members

International application No.

**PCT/CN2025/112969**

| Patent document cited in search report | | | Publication date (day/month/year) | Patent family member(s) | | | Publication date (day/month/year) |
|---|---|---|---|---|---|---|---|
| HK | 30114530 | A2 | 07 March 2025 | CN | 120340120 | A | 18 July 2025 |
| CN | 115620392 | A | 17 January 2023 | None | | | |
| CN | 106984027 | A | 28 July 2017 | None | | | |
| CN | 113611387 | A | 05 November 2021 | None | | | |
| US | 2023116624 | A1 | 13 April 2023 | None | | | |

Form PCT/ISA/210 (patent family annex) (July 2022)